(19) Europäisches Patentamt

European Patent Office

Office européen des brevets

(11) **EP 1 710 700 A2**

(12) **DEMANDE DE BREVET EUROPEEN**

(43) Date de publication:
**11.10.2006 Bulletin 2006/41**

(51) Int Cl.:
***G06F 11/28*** (2006.01)

(21) Numéro de dépôt: **06003908.8**

(22) Date de dépôt: **27.02.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **05.04.2005 FR 0503329**

(71) Demandeur: **STMICROELECTRONICS SA**
**92120 Montrouge (FR)**

(72) Inventeurs:
 • **Bancel, Frédéric**
   **13113 Lamanon (FR)**
 • **Berard, Nicolas**
   **13530 Trets (FR)**

(74) Mandataire: **Marchand, André**
   **OMNIPAT,**
   **24 Place des Martyrs de la Résistance**
   **13100 Aix-en-Provence (FR)**

(54) **Coprocesseur sécurisé comprenant des moyens pour empêcher l'accès à un organe du coprocesseur**

(57) L'invention concerne un coprocesseur (CP) comprenant un organe de calcul (CU) pour exécuter une commande, et un dispositif de sécurisation (MU) pour surveiller l'exécution de la commande et fournir un signal d'erreur (ERS) ayant une valeur active dès le début de l'exécution de la commande et une valeur inactive en fin d'exécution de la commande, si un déroulement anormal de l'exécution de la commande n'a pas été détecté. Le coprocesseur comprend également des moyens (MUX, BUF) pour empêcher l'accès à au moins un organe (OUTREG) du coprocesseur, tant que le signal d'erreur est à la valeur active. Application notamment à la protection des circuits intégrés pour cartes à puce contre les attaques par injection de fautes.

Fig. 2

**Description**

La présente invention concerne la protection contre les attaques par injection d'erreur des circuits intégrés tels que les circuits intégrés pour cartes à puce.

La présente invention concerne plus particulièrement un procédé pour surveiller l'exécution par un coprocesseur de commandes émises notamment par un microprocesseur, ainsi qu'un circuit intégré comportant un coprocesseur comprenant des moyens de surveillance de l'exécution de commandes.

Un coprocesseur est un composant spécifique conçu pour effectuer des calculs déterminés notamment pour décharger le microprocesseur auquel il est couplé. Il est généralement piloté par le microprocesseur qui communique avec lui par l'intermédiaire de registres pour charger des données de calcul, pour le configurer et enfin pour récupérer les résultats des calculs et être informé de la fin des calculs. Un coprocesseur comprend généralement un bloc de contrôle comportant une interface avec le bus de données du microprocesseur et une machine d'état cadençant le déroulement des calculs, et une unité de calcul commandé par le bloc de contrôle (appelée également "chemin de données").

Dans les circuits intégrés sécurisés, tels que ceux conçus pour les cartes à puce, les coprocesseurs sont notamment utilisés pour effectuer des calculs cryptographiques, et donc manipulent des clés secrètes. Ces coprocesseurs sont donc principalement visés par les attaques ayant pour but de découvrir ces clés.

Ces dernières années, les techniques de piratage des circuits intégrés sécurisés à microprocesseur (microprocesseurs, microcontrôleurs, mémoires à microprocesseur, coprocesseurs,...) ont considérablement évolué. A l'heure actuelle, les méthodes de piratage les plus avancées consistent à injecter des erreurs en des points déterminés d'un circuit intégré lors de l'exécution d'opérations dites sensibles, par exemple des opérations d'authentification ou des opérations d'exécution d'un algorithme de cryptographie. De telles attaques par injection d'erreur, appelées également attaques par injection de faute, permettent, en combinaison avec des modèles mathématiques, de déduire la structure d'un algorithme de cryptographie et/ou les clefs secrètes qu'il utilise. L'injection de faute peut être faite de diverses manières, en introduisant des perturbations ("glitches") dans la tension d'alimentation du circuit intégré, en introduisant des perturbations dans le signal d'horloge du circuit intégré, en exposant le circuit intégré à des radiations, etc.

Ainsi, la détection des injections d'erreur est considérée comme une mesure essentielle pour garantir un haut niveau de sécurité à certains circuits intégrés, notamment les circuits intégrés pour cartes à puce.

On connaît déjà, notamment par EP 1 161 725, un procédé de surveillance de l'exécution d'un programme consistant à produire des signatures cumulatives qui sont fonction des codes-instructions qui défilent dans le registre d'instructions d'un microprocesseur. Un tel procédé permet de détecter un déraillement du programme en cours d'exécution, dû notamment à une injection d'erreur.

Toutefois, un type d'attaque contre lequel un circuit intégré à microprocesseur doit être protégé est l'injection d'erreur dans les données fournies à un élément périphérique, notamment un coprocesseur cryptographique (qui est généralement intégré sur la même microplaquette de silicium que le microprocesseur). Or, la surveillance d'un déraillement au cours de l'exécution d'un programme par un microprocesseur ne permet pas de détecter une attaque du coprocesseur associé, du fait que ce dernier traite chaque commande émise par le microprocesseur sans interagir avec le microprocesseur avant la fin du traitement.

Il existe des techniques pour détecter une attaque d'un coprocesseur. Une de ces techniques consiste à lancer plusieurs fois le calcul à effectuer correspondant à la commande reçue, puis de comparer les résultats obtenus. Si ces résultats sont identiques, on en déduit qu'aucune attaque n'est intervenue. De cette manière, pour réussir une attaque, il faut que l'injection d'erreur soit répétée plusieurs fois, d'une manière identique dans ses effets et au niveau temporel. Cette technique conduit à multiplier les temps de calcul par le nombre d'itérations, ce qui constitue un inconvénient majeur. En outre, si la mise en évidence d'une erreur est liée à l'état d'une machine d'état, l'injection d'une faute peut conduire à sauter un état, et donc au masquage de l'erreur.

Une autre technique consiste à prévoir un circuit logique additionnel de détection d'injection de faute. En ce qui concerne l'unité de calcul qui n'a pas de propriété déterministe puisque les données traitées ne sont pas prévisibles, on prévoit des chemins de données redondants et on compare à la volée l'identité des signaux dans les chemins redondants. La détection d'une différence entre deux signaux redondants déclenche l'activation d'un signal d'erreur. En ce qui concerne le bloc de contrôle qui présente un aspect déterministe, on utilise un circuit de signature qui calcule pendant toute la durée de l'opération effectuée par le coprocesseur, une signature à partir de certains signaux de contrôle commandant l'unité de calcul. En fin de calcul, la signature calculée est comparée avec une valeur attendue et, si une différence est détectée, révélant une injection de faute, un signal d'alarme est activé. Or la comparaison, qu'elle soit réalisée de manière logicielle ou par un circuit, peut être court-circuitée par une injection de faute appropriée. Cette technique présente donc une faille.

La présente invention vise à pallier ces inconvénients.

A cet effet, une première idée de l'invention est de placer le coprocesseur dans un mode d'erreur par défaut dès le commencement de l'exécution d'une commande, et de maintenir le mode d'erreur tant que le bon déroulement de l'exécution de la commande n'est pas confirmé, y compris lorsque l'exécution de la commande est terminée si elle ne s'est par déroulée de façon attendue.

Une autre idée de l'invention est d'empêcher l'accès à certains organes du coprocesseur tant que le mode d'erreur est présent. L'invention se base en effet sur la constatation qu'une injection de fautes volontaire est généralement accompagnée d'un accès à des organes "sensibles" du coprocesseur, par exemple un registre de sortie, ce qui permet au fraudeur d'observer les effets de l'injection de faute et d'en déduire des informations sur le coprocesseur ou des données secrètes qu'il utilise.

Ainsi, le blocage de l'accès à des organes "sensibles" du coprocesseur, combiné avec le fait de le placer dans un mode d'erreur par défaut qui ne peut être levé que si la commande a été correctement exécutée, offre un haut niveau de sécurité.

Plus particulièrement, la présente invention prévoit un procédé pour surveiller l'exécution d'une commande par un coprocesseur, comprenant des étapes consistant à :

- produire au début de l'exécution de la commande un signal d'erreur ayant une valeur active, pendant l'exécution de la commande,
- surveiller le fonctionnement du coprocesseur afin de détecter un déroulement anormal de l'exécution de la commande, en fin d'exécution de la commande,
- porter le signal d'erreur à une valeur inactive sauf si un déroulement anormal de l'exécution de la commande a été détecté, et
- empêcher l'accès à au moins un organe à protéger du coprocesseur, tant que le signal d'erreur est à une valeur active.

Selon un mode de réalisation, l'organe à protéger comprend au moins un registre du coprocesseur.

Selon un mode de réalisation, le registre est protégé en lecture.

Selon un mode de réalisation, le registre est protégé en lecture en fournissant à la sortie du registre des données binaires factices sans rapport avec le contenu du registre, en réponse à une demande de lecture du registre.

Selon un mode de réalisation, le procédé comprend les étapes consistant à produire en synchronisation avec un signal d'horloge des signatures cumulatives courantes, chaque signature cumulative courante étant fonction d'une signature cumulative précédente et de signaux logiques déterministes prélevés dans le coprocesseur, jusqu'à obtenir, au terme de l'exécution de la commande, une signature cumulative finale, et maintenir le signal d'erreur à la valeur active quand la signature cumulative est différente d'une signature attendue.

Selon un mode de réalisation, la production des signatures est cadencée par un signal d'horloge du coprocesseur, une signature cumulative courante étant produite à chaque cycle d'horloge pendant l'exécution de la commande.

Selon un mode de réalisation, les signaux logiques déterministes comprennent des signaux de contrôle produits par un organe de contrôle du coprocesseur.

Selon un mode de réalisation, le calcul des signatures cumulatives est effectué au moyen d'un registre à décalage à contre-réaction linéaire.

Selon un mode de réalisation, la signature attendue est lue dans un registre dédié du coprocesseur.

Selon un mode de réalisation, la signature attendue est sélectionnée parmi une pluralité de signatures attendues correspondant chacune à une commande exécutable par le coprocesseur.

L'invention concerne également un coprocesseur comprenant un organe de calcul pour exécuter une commande, un dispositif de sécurisation pour surveiller l'exécution de la commande et produire un signal d'erreur ayant une valeur active dès le début de l'exécution de la commande, et une valeur inactive en fin d'exécution de la commande sauf si un déroulement anormal de l'exécution de la commande a été détecté, et des moyens de protection pour empêcher l'accès à au moins un organe à protéger du coprocesseur, tant que le signal d'erreur est à la valeur active.

Selon un mode de réalisation, les moyens de protection sont agencés pour empêcher l'accès à au moins un registre du coprocesseur.

Selon un mode de réalisation, les moyens de protection sont agencés pour empêcher l'accès en lecture à au moins un registre du coprocesseur.

Selon un mode de réalisation, les moyens de protection comprennent des moyens pour fournir à la sortie du registre des données binaires factices sans rapport avec le contenu du registre, en réponse à une demande de lecture du registre.

Selon un mode de réalisation, le dispositif de sécurisation comprend un circuit de calcul de signatures recevant en entrée des signaux logiques déterministes prélevés dans le coprocesseur et produisant une signature cumulative courante en fonction des signaux logiques déterministes et d'une signature cumulative précédente, jusqu'à l'obtention d'une signature cumulative finale au terme de l'exécution de la commande, et des moyens de comparaison de la signature cumulative courante et d'une signature attendue, portant le signal d'erreur à la valeur active quand la signature cumulative courante est différente de la signature attendue.

Selon un mode de réalisation, le coprocesseur comprend un organe de contrôle produisant les signaux de contrôle, et les signaux logiques déterministes comprennent des signaux de contrôle produits par l'organe de contrôle.

Selon un mode de réalisation, le circuit de calcul de signatures est cadencé par un signal d'horloge et calcule une signature cumulative courante à chaque cycle d'horloge.

Selon un mode de réalisation, le circuit de calcul de signatures comprend un registre à décalage à contre-réaction linéaire.

Selon un mode de réalisation, le coprocesseur comprend un registre dédié pour stocker la signature attendue.

Selon un mode de réalisation, le coprocesseur comprend des moyens pour sélectionner la signature attendue parmi une pluralité de signatures attendues préenregistrées correspondant chacune à une commande exécutable par le coprocesseur.

Ces objets, caractéristiques et avantages ainsi que d'autres de la présente invention seront exposés plus en détail dans la description suivante d'un exemple de coprocesseur selon l'invention, faite à titre non limitatif en relation avec les figures jointes parmi lesquelles :

- la figure 1 représente schématiquement l'architecture d'un circuit intégré à microprocesseur comprenant un coprocesseur,
- la figure 2 est une vue plus détaillée, sous forme de schéma-bloc d'un coprocesseur comprenant un dispositif de sécurisation selon l'invention,
- la figure 3 représente un exemple de réalisation du dispositif de sécurisation, et
- la figure 4 représente plus en détail un élément du dispositif de sécurisation.

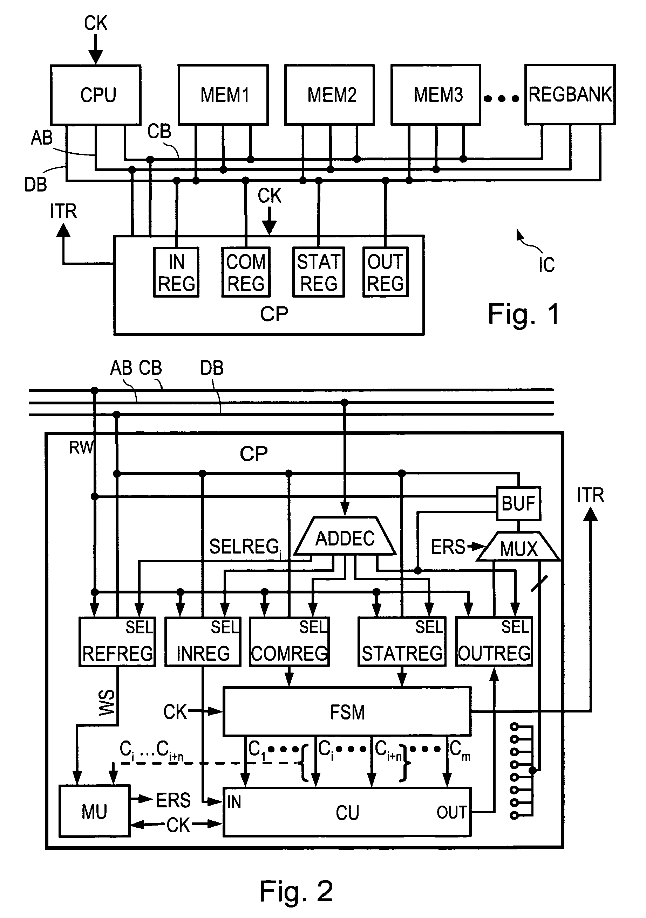

La figure 1 représente l'architecture d'un circuit intégré IC du type microprocesseur ou microcontrôleur. Le circuit intégré IC comprend classiquement une unité centrale de traitement CPU et des éléments périphériques du CPU, ici des mémoires MEM1, MEM2, MEM3, une banque de registres REGBANK et un coprocesseur CP, dédié par exemple au calcul cryptographique. La mémoire MEM1 est par exemple une mémoire non volatile de type ROM (mémoire morte), la mémoire MEM2 une mémoire effaçable et programmable électriquement de type EEPROM, et la mémoire MEM3 une mémoire volatile de type RAM.

Les éléments périphériques sont reliés au CPU par un bus de données DB, un bus d'adresse AB, ainsi qu'un bus de contrôle CB. On désigne par "bus de contrôle" un ensemble de fils véhiculant des signaux de sélection ou d'information émis par le CPU à l'attention des éléments périphériques, ou vice-versa. Le bus CB véhicule notamment un signal RW de lecture ou écriture et un signal FETCH émis par le CPU lors de la lecture d'un code-instruction dans l'une des mémoires programme.

Le coprocesseur CP comprend plusieurs registres reliés au bus de données DB, ici des registres d'entrée INREG et de sortie OUTREG permettant d'échanger des données avec le CPU, un registre COMREG permettant de recevoir du CPU une commande à exécuter, et un registre d'état STATREG fournissant des informations sur l'état du coprocesseur. Le registre STATREG comprend un bit RB (Ready/Busy) permettant au CPU de déterminer si le coprocesseur est occupé ou prêt à recevoir une nouvelle commande à exécuter, et un bit RUN permettant au CPU de lancer l'exécution d'une commande une fois que le code de la commande a été inscrit dans le registre COMREG. Pour lancer l'exécution d'une commande chargée dans le registre COMREG, le coprocesseur positionne le bit RUN à une valeur logique déterminée. Lorsque le traitement de la commande est terminé, le coprocesseur positionne le bit RB à l'état logique "prêt" (Ready) et réinitialise le bit RUN. En surveillant l'état du bit RB, par exemple périodiquement, le CPU peut déterminer quand le coprocesseur a terminé l'exécution de la commande. Alternativement, le coprocesseur peut être conçu pour lever un signal d'interruption ITR lorsqu'il a terminé de traiter la commande, ce signal étant appliqué à une entrée d'interruption du CPU.

Comme représenté sur la figure 2, le coprocesseur CP comprend un décodeur d'adresses ADDEC relié au bus d'adresse AB et fournissant des signaux SELREGi de sélection d'un registre en fonction de l'adresse transmise sur le bus AB, chacun de ces signaux étant appliqué à une entrée de sélection SEL de l'un des registres INREG, COMREG, STATREG, OUTREG. Le signal RW est également appliqué aux registres, pour sélectionner un mode d'accès, en écriture ou en lecture.

Le coprocesseur CP comprend également une unité de calcul CU pilotée par un bloc de contrôle FSM. Ce dernier est réalisé ici sous la forme d'une machine d'état à états finis (Finite State Machine) cadencée par un signal d'horloge, par exemple le signal d'horloge CK du CPU, et est conçu pour déterminer un état courant en fonction d'un état précédent et de signaux d'entrée provenant par exemple des registres COMREG et STATREG. A chaque état du bloc de contrôle FSM correspond un ensemble de signaux de contrôle $C_1$ à $C_m$ fournis par le bloc de contrôle FSM, qui sont appliqués en tout ou en partie à l'unité de calcul CU.

L'unité de calcul CU traite des données d'entrée provenant du registre d'entrée INREG en fonction des signaux de contrôle $C_1$ à $C_m$, et délivre des données de sortie qui sont inscrites dans des registres du coprocesseur tel que le registre de sortie OUTREG. En fin de calcul correspondant au traitement de la commande fournie par le CPU dans le registre COMREG, le bloc de contrôle FSM peut délivrer le signal d'interruption ITR pour indiquer au CPU que le traitement est terminé.

Le coprocesseur CP comprend également un dispositif de sécurisation MU selon l'invention, qui surveille le fonctionnement du coprocesseur pendant l'exécution d'une commande, afin de détecter un déroulement anormal de l'exécution de la commande dû notamment à une injection d'erreur. A cet effet, le dispositif MU utilise par exemple des signaux déterministes $C_i$ à $C_{i+n}$ prélevés parmi les signaux de contrôle $C_1$ à $C_m$ fournis par le bloc de contrôle FSM. Ces signaux sont déterministes (prédictibles) en ce qu'ils ne dépendent que de la commande qu'exécute le coprocesseur, et permettent ainsi de surveiller le bon déroulement de l'exécution de la commande.

Pour éviter que l'information de détection d'une attaque soit masquée par une injection de fautes, le dispositif MU active un signal d'erreur interne ERS dès le début de l'exécution de la commande, et le désactive à la fin du traitement de la commande, sauf si un déroulement anormal de l'exécution de la commande a été détecté.

Le coprocesseur CP comprend également des moyens pour empêcher l'accès à certains organes à protéger, tant que le signal d'erreur ERS est actif. L'accès à ces organes n'est ainsi possible que lorsque le signal d'erreur a été désactivé, soit à la fin du traitement de la commande si ce traitement s'est déroulé normalement.

A titre d'exemple, l'organe à protéger est ici le registre de sortie OUTREG. Plus particulièrement, le registre OUTREG est protégé ici en lecture et cette protection est obtenue ici en prévoyant un brouillage des données qu'il fournit en réponse à une demande de lecture (se traduisant par l'apparition de l'adresse de ce registre sur le bus de données, l'activation du signal SELREGi correspondant à ce registre par le décodeur ADDEC et le fait que le signal RW soit ou passe à la valeur "lecture" sur le bus de contrôle).

A cet effet, le coprocesseur comprend un multiplexeur MUX recevant sur une entrée la sortie du registre OUTREG et sur une autre entrée des données binaires factices sans rapport avec le contenu du registre, par exemple des données aléatoires ou des signaux prélevés dans le coprocesseur. La sortie du multiplexeur est reliée au bus de données DB. Le multiplexeur reçoit sur une entrée de sélection le signal d'erreur ERS produit par le dispositif de sécurisation MU, et sa sortie fournit les données binaires factices si le signal d'erreur ERS est à la valeur active ou le contenu du registre si le signal d'erreur ERS est à la valeur inactive.

Ainsi, tant que l'exécution de la commande n'est pas terminée ou si un défaut dans le traitement de la commande est détecté, le signal d'erreur ERS est activé et le multiplexeur MUX, en réponse à une sélection du registre OUTREG en lecture, fournit les données factices sur le bus BD en lieu et place des données présentes dans le registre OUTREG.

Afin de ne pas appliquer en permanence les données factices sur le bus quand le signal ERS est actif, un circuit tampon BUF est agencé entre la sortie du multiplexeur MUX et le bus de données DB. Le circuit BUF reçoit sur une entrée de commande le signal de sélection SELREGi correspondant au registre OUTREG ainsi que le signal RW. La sortie du circuit BUF est par défaut dans un état haute impédance et devient transparente relativement à l'entrée du circuit BUF lorsque le registre OUTREG est sélectionné en lecture, pour connecter la sortie du multiplexeur MUX au bus DB.

De façon similaire, les sorties des registres sont par défaut dans l'état haute impédance, tant que les registres ne sont pas sélectionnés en lecture.

Si plusieurs registres doivent être protégés en lecture, la sortie de chaque registre à protéger est équipée d'un multiplexeur et d'un circuit tampon tels que ceux qui viennent décrits. Ces éléments de protection peuvent aussi être intégrés dans les registres eux-mêmes, sachant qu'une structure de registre classique comporte généralement un étage de sortie de type tampon (buffer) ou verrou (latch). Un multiplexeur ou tout autre moyen de brouillage de données peut ainsi être agencé avant cet étage de sortie.

Il est à noter que si le CPU doit surveiller la fin du traitement effectué par le coprocesseur en lisant périodiquement le registre d'état STATREG, ce registre ne doit pas être protégé en lecture.

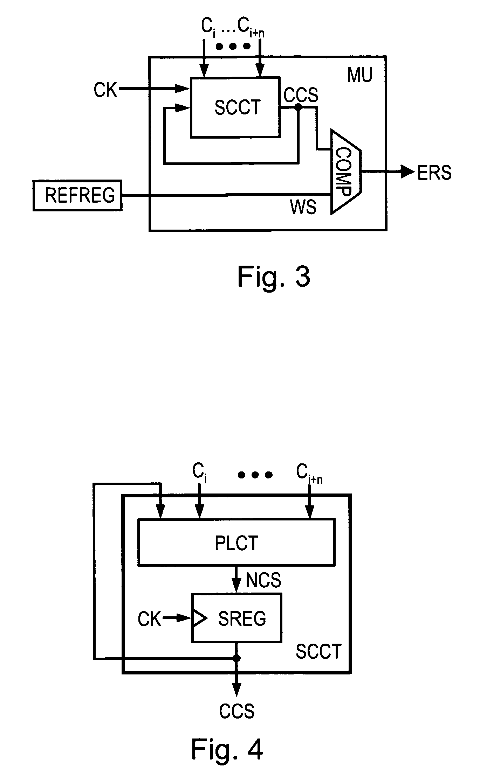

La figure 3 représente un exemple de réalisation du dispositif de sécurisation MU.

Le dispositif MU comprend un circuit de calcul de signatures SCCT à logique câblée comportant des entrées parallèles recevant les signaux déterministes $C_i$ à $C_{i+n}$, et une sortie fournissant une signature courante CCS. La signature CCS est renvoyée sur une entrée du circuit SCCT pour que celui-ci calcule, au rythme d'un signal d'horloge CK qui peut être celui du CPU, une signature cumulative suivante qui remplace la signature cumulative courante à chaque nouveau cycle du signal d'horloge.

La signature courante CCS est appliquée à une entrée d'un comparateur COMP dont l'autre entrée reçoit une signature attendue WS, fournie ici par un registre dédié REFREG du coprocesseur (fig.2 et 3). La signature attendue WS est par exemple inscrite dans le registre REFREG par le CPU après que celui-ci a chargé la commande à exécuter dans le registre COMREG et avant qu'il ne positionne le drapeau RUN dans le registre STATREG. Alternativement, le coprocesseur est équipé d'une table ou d'une banque de registres comprenant une pluralité de signatures attendues, chacune étant fonction d'une commande d'un jeu de commandes du coprocesseur, et la signature attendue WS est sélectionnée par le coprocesseur ou le dispositif MU en fonction de la commande reçue, avant de commencer à exécuter la commande.

Le comparateur COMP comporte une sortie inverseuse qui délivre le signal d'erreur interne ERS. Celui-ci est ici égal à "1" (valeur active) tant que la signature courante CCS est différente de la signature attendue WS.

Ainsi, tant que le traitement de la commande n'est pas terminé, la signature calculée est différente de la valeur attendue et le signal d'erreur ERS est à "1". Toute tentative de lecture du registre OUTREG se solde par la fourniture des donnés factices sur le bus de données, tant que l'exécution de la commande n'est pas terminée (car la signature attendue n'est pas encore atteinte) voire après traitement de la commande si ce traitement ne s'est pas déroulé de la manière attendue (la signature attendue n'étant alors jamais atteinte).

La figure 4 illustre un exemple de réalisation du circuit SCCT sous la forme d'un registre LFSR (Linear Feedback Shift Register), soit un registre à décalage à contre réaction linéaire. Le circuit SCCT comprend un circuit logique PLCT et un registre de signature SREG à entrée et sortie de type parallèle. Le circuit PLCT exécute une fonction de signature Fs et comprend des entrées recevant les signaux de contrôle $C_i$ à $C_{i+n}$ appliqués en entrée du dispositif de sécurisation MU, ainsi qu'une entrée recevant une signature cumulative courante CCS. La sortie du circuit PLCT fournit à l'entrée du registre SREG une signature cumulative suivante NCS qui est fonction de la signature cumulative courante CCS et des signaux appliqués sur ses autres entrées, soit :

$$NCS = Fs(CCS, C_i, \ldots, C_{i+n}) \qquad (1)$$

A chaque nouveau cycle d'horloge CK, le registre SREG recopie sur sa sortie la signature présente sur son entrée, de sorte que la signature suivante fournie par le circuit PLCT au cours du cycle d'horloge précédent devient la signature courante, et que la signature courante du cycle d'horloge précédent devient la signature précédente PCS, soit :

$$CCS = Fs(PCS, C_i, \ldots, C_{i+n}) \qquad (2)$$

la relation (2) étant équivalente à la relation (1) vue depuis la sortie du registre SREG.

Dans un souci de simplicité, divers signaux dont la prévision est à la portée de l'homme de l'art n'ont pas été décrits dans ce qui précède, seuls les signaux nécessaires à la compréhension de l'invention ayant été décrits.

Il apparaîtra clairement à l'homme de l'art que l'invention est susceptible de diverses variantes de réalisation et perfectionnements.

De façon générale, l'homme de l'art peut prévoir divers autres modes de réalisation d'un dispositif de sécurisation permettant de porter par défaut le circuit intégré dans un mode d'erreur durant l'exécution par le coprocesseur d'une commande, et d'empêcher l'accès à des organes du coprocesseur tant que le circuit est en mode d'erreur.

Egalement, bien que l'on ait décrit dans ce qui précède le dispositif de sécurisation MU comme un élément distinct du bloc de contrôle FSM, celui-ci peut être intégré dans le bloc de contrôle et des fonctionnalités supplémentaires peuvent être prévues en relation avec la sécurité.

Notamment, dans un mode de réalisation, le bloc FSM est agencé pour vérifier que le signal d'erreur interne ERS est bien à la valeur active avant d'initier l'exécution d'une commande. Si cela n'est pas le cas, le bloc FSM force à la valeur active le signal d'erreur externe ERS et peut se placer lui-même dans un état déterminé d'où il ne peut sortir qu'après une réinitialisation complète du coprocesseur.

D'autre part, il va de soi que les valeurs logiques décrites plus haut correspondant à l'état actif des signaux n'ont qu'une valeur relative.

Le contrôle du bon déroulement de l'exécution de la commande peut par ailleurs être effectué de diverses manières, par exemple en appliquant des techniques de contrôle évoquées au préambule, basées sur une redondance des chemins de données présents dans l'unité de calcul du coprocesseur, ou en combinant de telle technique avec celle basée sur une production de signatures fonction de signaux déterministes.

Enfin, la notion de coprocesseur au sens de l'invention ne doit pas être comprise de façon limitative. De façon générale, un coprocesseur au sens de l'invention est un circuit à logique câblée prévu pour exécuter des opérations spécifiques en réponse à une commande qui lui est fournie. Ainsi, peuvent être par exemple sécurisés au moyen de l'invention des circuits à logique câblée qui assurent le contrôle de bus de données ou d'adresse dans des microprocesseurs ou les microcontrôleurs ou qui contrôlent l'accès à des mémoires, et qui comportent des organes "sensibles" Il devant être protégés contre des intrusions au moins pendant l'exécution de certaines opérations déclenchées par des commandes spécifiques.

**Revendications**

1. Procédé pour surveiller l'exécution d'une commande par un coprocesseur (CP), **caractérisé en ce qu'**il comprend des étapes consistant à :

   produire au début de l'exécution de la commande un signal d'erreur (ERS) ayant une valeur active ("1"),
   pendant l'exécution de la commande, surveiller le fonctionnement du coprocesseur afin de détecter un déroulement anormal de l'exécution de la commande,
   en fin d'exécution de la commande, porter le signal d'erreur à une valeur inactive sauf si un déroulement anormal de l'exécution de la commande a été détecté, et
   empêcher l'accès à au moins un organe à protéger (OUTREG) du coprocesseur, tant que le signal d'erreur est à une valeur active.

2. Procédé selon la revendication 1, dans lequel l'organe à protéger comprend au moins un registre (OUTREG) du coprocesseur (CP).

3. Procédé selon la revendication 2, dans lequel le registre (OUTREG) est protégé en lecture.

4. Procédé selon la revendication 2 ou 3, dans lequel le registre est protégé en lecture en fournissant à la sortie du registre des données binaires factices sans rapport avec le contenu du registre, en réponse à une demande de lecture du registre.

5. Procédé selon l'une des revendications 1 à 4, comprenant les étapes consistant à

   - produire en synchronisation avec un signal d'horloge (CK) des signatures cumulatives courantes (CCS), chaque signature cumulative courante étant fonction d'une signature cumulative précédente (PCS) et de signaux logiques déterministes ($C_i$ à $C_{i+n}$) prélevés dans le coprocesseur, jusqu'à obtenir, au terme de l'exécution de la commande, une signature cumulative finale, et
   - maintenir le signal d'erreur (ERS) à la valeur active quand la signature cumulative est différente d'une signature attendue (WS).

6. Procédé selon la revendication 5, dans lequel la production des signatures est cadencée par un signal d'horloge (CK) du coprocesseur, une signature cumulative courante (CCS) étant produite à chaque cycle d'horloge pendant l'exécution de la commande.

7. Procédé selon l'une des revendications 5 et 6, dans lequel les signaux logiques déterministes ($C_i$ à $C_{i+n}$) comprennent des signaux de contrôle produits par un organe de contrôle (FSM) du coprocesseur (CP).

8. Procédé selon l'une des revendications 5 à 7, dans lequel le calcul des signatures cumulatives est effectué au moyen d'un registre à décalage à contre-réaction linéaire (PLCT).

9. Procédé selon l'une des revendications 5 à 8, dans lequel la signature attendue (WS) est lue dans un registre dédié (REFREG) du coprocesseur.

10. Procédé selon l'une des revendications 5 à 8, dans lequel la signature attendue (WS) est sélectionnée parmi une pluralité de signatures attendues correspondant chacune à une commande exécutable par le coprocesseur (CP).

11. Coprocesseur (CP) comprenant un organe de calcul (CU) pour exécuter une commande, **caractérisé en ce qu'**il comprend :

    - un dispositif de sécurisation (MU, SCCT, COMP) pour surveiller l'exécution de la commande et produire un signal d'erreur (ERS) ayant une valeur active ("1") dès le début de l'exécution de la commande, et une valeur inactive en fin d'exécution de la commande sauf si un déroulement anormal de l'exécution de la commande a été détecté, et
    - des moyens de protection (MUX, BUF) pour empêcher l'accès à au moins un organe (OUTREG) à protéger du coprocesseur, tant que le signal d'erreur est à la valeur active.

12. Coprocesseur selon la revendication 11, dans lequel les moyens de protection sont agencés pour empêcher l'accès à au moins un registre (OUTREG) du coprocesseur (CP).

**13.** Coprocesseur selon l'une des revendications 11 et 12, dans lequel les moyens de protection sont agencés pour empêcher l'accès en lecture à au moins un registre (OUTREG) du coprocesseur (CP).

**14.** Coprocesseur selon l'une des revendications 12 et 13, dans lequel les moyens de protection comprennent des moyens (MUX, BUF) pour fournir à la sortie du registre des données binaires factices sans rapport avec le contenu du registre, en réponse à une demande de lecture du registre.

**15.** Coprocesseur selon l'une des revendications 11 à 14, dans lequel le dispositif de sécurisation (MU) comprend :

- un circuit (SCCT) de calcul de signatures recevant en entrée des signaux logiques déterministes ($C_i$ à $C_{i+n}$) prélevés dans le coprocesseur et produisant une signature cumulative courante (CCS) en fonction des signaux logiques déterministes et d'une signature cumulative précédente (PCS), jusqu'à l'obtention d'une signature cumulative finale au terme de l'exécution de la commande, et
- des moyens (COMP) de comparaison de la signature cumulative courante (CCS) et d'une signature attendue (WS), portant le signal d'erreur (ERS) à la valeur active quand la signature cumulative courante est différente de la signature attendue (WS).

**16.** Coprocesseur selon la revendication 15, comprenant un organe de contrôle (FSM) produisant les signaux de contrôle, et dans lequel les signaux logiques déterministes ($C_i$ à $C_{i+n}$) comprennent des signaux de contrôle produits par l'organe de contrôle (FSM).

**17.** Coprocesseur selon l'une des revendications 15 et 16, dans lequel le circuit de calcul de signatures (SCCT) est cadencé par un signal d'horloge (CK) et calcule une signature cumulative courante (CCS) à chaque cycle d'horloge.

**18.** Coprocesseur selon l'une des revendications 15 à 17, dans lequel le circuit (SCCT) de calcul de signatures comprend un registre à décalage à contre-réaction linéaire (PLCT).

**19.** Coprocesseur selon l'une des revendications 15 à 18, comprenant un registre dédié (REFREG) pour stocker la signature attendue (WS).

**20.** Coprocesseur selon l'une des revendications 15 à 18, comprenant des moyens pour sélectionner la signature attendue (WS) parmi une pluralité de signatures attendues préenregistrées correspondant chacune à une commande exécutable par le coprocesseur.

Fig. 1

Fig. 2

$C_i \ldots C_{i+n}$

● ● ●

MU

CK →

SCCT

CCS

COMP

ERS

REFREG

WS

Fig. 3

$C_i$ ● ● ● $C_{i+n}$

PLCT

NCS

CK →

SREG

SCCT

CCS

Fig. 4

**EP 1 710 700 A2**